(19) Europäisches Patentamt
European Patent Office
Office européen des brevets

(11) Veröffentlichungsnummer: **0 450 354 A2**

# (12) EUROPÄISCHE PATENTANMELDUNG

(21) Anmeldenummer: **91103874.3**

(22) Anmeldetag: **14.03.91**

(51) Int. Cl.[5]: **C09K 19/02**, C09K 19/30, C09K 19/04, C09K 19/34

(30) Priorität: **31.03.90 DE 4010447**

(43) Veröffentlichungstag der Anmeldung: **09.10.91 Patentblatt 91/41**

(84) Benannte Vertragsstaaten: **DE GB**

(71) Anmelder: **MERCK PATENT GESELLSCHAFT MIT BESCHRÄNKTER HAFTUNG**
**Frankfurter Strasse 250**
**W-6100 Darmstadt(DE)**

(72) Erfinder: **Poetsch, Eike Dr.**
**Am Buchwald 4**
**W-6103 Mühltal(DE)**
Erfinder: **Finkenzeller, Ulrich, Dr.**
**Waldfpad 74**
**W-6831 Plankstadt(DE)**
Erfinder: **Hittich, Reinhard, Dr.**
**Am Kirchberg 11**
**W-6101 Modautal 1(DE)**

## (54) Matrix-Flüssigkristallanzeige.

(57) Matrix-Flüssigkristallanzeige nach dem Oberbegriff von Anspruch 1, dadurch gekennzeichnet, daß die Flüssigkristallmischung auf dielektrisch positiven Flüssigkristallverbindungen basiert, die eine polare Endgruppe der Formel I mit einem Lipophilieparameter $\pi \geqq 0{,}1$ enthalten.

EP 0 450 354 A2

Die Erfindung betrifft eine Matrix-Flüssigkristallanzeige gemäß dem Oberbegriff von Anspruch 1.

Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:

1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt vewendet. Die Verwendung von einkristallinem Silizium als Substratmaterial beschränkt die Displaygröße, da die modulartige Zuammensetzung verschiedener Teildisplays an den Stößen zu Problemen führt.

Bei dem aussichtsreicheren Typ 2, welcher bevorzugt ist, wird als elektrooptischer Effekt überlicherweise der TN-Effekt verwendet. Man unterscheidet zwei Technologien: TFT's aus Verbindungshalbleitern wie z. B. CdSe oder TFT's auf der Basis von polykristallinem oder amorphem Silizium.

An letzterer Technologie wird weltweit mit großer Intensität gearbeitet. Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die Elektrodenschichten sind mit darüberliegenden Orientierungsschichten versehen, die u.a. auf Polymerschichten wie z. B. Polyimidschichten oder Polyvinylalkoholschichten, basieren, denen durch Reiben, ggf. bei gleichzeitiger Druckanwendung, eine einheitliche Ausrichtung gegeben wird. Daneben können Orientierungsschichten auch durch Bedampfung mit anorganischen Materialien wie z. B. Siliciumoxid oder Magnesiumfluorid erhalten werden. Eine Übersicht über die verschiedenen Ausrichtungstechniken findet sich z. B. in Thermotripic Liquid Crystals, G. W. Gray [ed.], S. 75-77.

Die TFT-Anzeigen basieren üblicherweise auf dem TN-Prinzip, so daß die Flüssigkristallmoleküle eine parallele Randorientierung, üblicherweise mit einem kleinen Pretilt-Winkel in der Größenordnung von z. B. $1^{\circ}$-$10^{\circ}$ aufweisen. Es ist aber auch möglich, daß die TFT-Anzeigen als ECB- oder STN-Zellen arbeiten oder auch auf weiteren Prinzipien wie z. B. dem Guest-Host-Prinzip basieren.

Der Begriff MFK-Anzeigen ist weit gefaßt und umfaßt jedes Matrix-Display mit integrierten nichtlinearen Elementen, d.h. neben der aktiven Matrix auch Anzeigen mit passiven Elementen wie z. B. Varistoren oder Dioden (MIM = Metall-Isolator-Metall) und auch weitere Anzeigentypen.

MFK-Anzeigen eignen sich insbesondere z. B. für TV- und Computeranwendungen oder für hochinformative Displays im Automobil- oder Flugzeugbau. Neben Problemen hinsichtlich der Winkelabhängigkeit des Kontrastes (Katayama, M. et al., Proceedings SID Conference, Anaheim, May 1988, S. 312, Inoue, F. et al., ibid., S. 318, Niki, K., ibid., S. 322) und zu hohen Schaltzeiten resultieren bei MFK-Anzeigen insbesonders Schwierigkeiten bedingt durch den nicht ausreichend hohen spezifischen Widerstand der Flüssigkristallmischungen (Togashi, S,. et al., Proceedings Eurodisplay 84, Paris, September 1984, S. 141; Stromer, M., ibid., S. 145; Barm, Y., et al., Proceedings Japan Display, Tokio, September 1986, S. 68; Vijan, M., Proceedings SID Conference, New Orleans, May 1987, S. 159; Blinov, L. M., Electrooptical and Magneto-optical Properties of Liquid Crystals, Wiley, 1983, Kap. 5). Mit abnehmendem spezifischem Widerstand verschlechtert sich der Kontrast von MFK-Anzeigen.

Der spezifische Widerstand eines Flüssigkristalls innerhalb einer MFK-Anzeige wird von dem Reinheitsgrad der inneren Oberflächen der Anzeige beeinflußt, wobei die Reinheit und der Polymerisationsprozeß des als Orientierungsschicht benutzten organischen Polymers eine wichtige Rolle spielen.

Von entscheidender Bedeutung sind jedoch die Eigenschaften des Flüssigkristalls selbst, und es ist daher bereits versucht worden, Korrelationen zwischen dem spezifischen Widerstand und anderen Parametern des Flüssigkristalls zu finden. So wird z. B. in G. Weber et al., Liquid Crystals, 5 (1989) 1381 die durchschnittliche Dielektrizitätskonstante $\bar{\epsilon}$ gemäß (1)

$$\bar{\epsilon} = (2\,\epsilon_{\perp} + \epsilon_{\parallel})/3 \qquad (1)$$

wobei $\epsilon_{\parallel}$ bzw. $\epsilon_{\perp}$ die Dielektrizitätskonstante des Flüssigkristalls parallel bzw. senkrecht zum Direktor der Flüssigkristallmoleküle bedeuten, als Maß für den spezifischen Widerstand des Flüssigkristalls diskutiert. Aus der gefundenen Korrelation wird abgeleitet, daß polare Mischungen, u.a. einen geringeren spezifischen Widerstand aufweisen als nicht-polare Mischungen und daß $\bar{\epsilon}$ so klein wie möglich gehalten werden sollte. Dieser Zusammenhang gilt jedoch nicht allgemein und stellt darüberhinaus wegen seinem qualitativen Charakters keine technische Lehre zur Konzeption von Flüssigkristallmischungen dar.

Neben einem unzureichenden spezifischen Widerstand weisen die bisherigen MFKA's bzw. die darin

enthaltenen Flüssigkristallmischungen häufig einen nicht ausreichenden Arbeitstemperaturbereich, zu hohe Schaltzeiten, eine zu hohe Schwellenspannung und eine nicht ausreichende UV- und Temperaturstabilität auf.

Der Erfindung liegt die Aufgabe zugrunde, MFKA's bereitzustellen, die die oben angegebenen Nachteile nicht oder nur in geringem Maße und gleichzeitig einen sehr hohen spezifischen Widerstand aufweisen.

Es wurde nun gefunden, daß diese Aufgabe durch die Bereitstellung der erfindungsgemäßen MFKA's gelöst werden kann.

Gegenstand der Erfindung ist somit eine MFKA mit

- zwei planparallelen Trägerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie,

dadurch gekennzeichnet, daß die Flüssigkristallmischung auf dielektrisch positiven Flüssigkristallverbindungen basiert, die eine polare Endgruppe der Formel I enthalten,

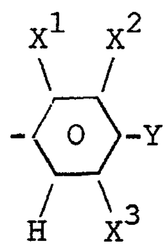

I

worin

Y -NCS, -F, -Cl, $-CZ_lH_{3l-1}$ oder $OCZ_lH_{3l-1}$,

$X^1$, $X^2$ und $X^3$ unabhängig voneinander H oder F,

Z Cl oder F und l 1, 2 oder 3

bedeuten, wobei der endgruppenbezogene Lipophilieparameter einen Wert $\tilde{\pi} \geq 0,1$ aufweist.

Gegenstand der Erfindung sind weiter entsprechende Flüssigkristallmischungen, insbesondere zur Verwendung in MFKA's. Die Mischungen eignen sich jedoch auch für viele andere Anwendungen, wie z. B. TN, STN oder OMI.

In T. Fujita et al., J. Amer Chem. Soc. 86 (1964) 5175 wird der Lipophilieparameter einer substituierten Verbindung X, die als Derivat einer unsubstituierten Verbindung aufgefaßt werden kann, definiert als

$$\pi = \log P_X - \log P_H \qquad (2)$$

wobei $P_X$ der Verteilungsquotient des Derivats und $P_H$ der der unsubstituierten Verbindung im System Octan-1-ol/Wasser ist.

Im Rahmen der vorliegenden Erfindung wird neben $\pi$ ein weiterer durch Modifikation von (2) erhaltener Lipophiliebegriff $\tilde{\pi}$ verwendet,

$$\tilde{\pi} = \log P_{I*} - \log P_B \qquad (3)$$

wobei $P_{I*}$ der Verteilungsquotient von I*

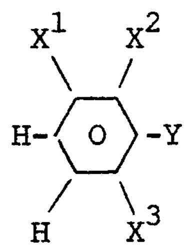

I*

und $P_B$ der von unsubstituiertem Benzol ist; $X^1$, $X^2$, $X^3$ und Y haben die oben angegebene Bedeutung.

$\tilde{\pi}$ ist demnach ein Maß für die Lipophilie der polaren Endgruppe I, während $\pi$ die Lipophilie der die polare Endgruppe I enthaltenden Flüssigkristallverbindung charakterisiert. Die Ermittlung von $\tilde{\pi}$ ist einfach und zuverlässig und es können häufig entsprechende Werte aus der Literatur herangezogen werden. Demgegenüber ist die Bestimmung von $\pi$ gemäß (2) aus den Verteilungsquotienten der eine Endgruppe der Formel I aufweisenden Flüssigkristallverbindungen und den entsprechenden unsubstituierten Stammverbindungen analytisch wesentlich aufwendiger.

Wenn man annimmt, daß der Lipophilieparameter eines Moleküls sich additiv aus den Lipophilieparametern der das Molekül aufbauenden Unterstrukturen zusammensetzt, sollten $\pi$ und $\tilde{\pi}$ identisch sein. Tatsächlich wird jedoch eine mehr oder weniger starke Abweichung beobachtet, deren Ausmaß jedoch i. a. klein ist und insbesondere für Flüssigkristallverbindungen der Formel A

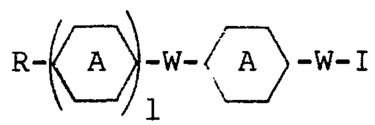

A

worin

R eine Alkylgruppe mit 1-15 C-Atomen, worin auch eine oder mehrere nicht benachbarte $CH_2$-Gruppen durch -O-, -CO, -COO- oder -CH=CH- ersetzt sein können,

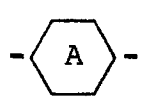

jeweils unabhängig voneinander 1,4-Cyclohexylen, lateral unsubstituiertes oder durch F in 2,3 - und/oder 5-Stellung mono- oder di-substituiertes 1,4-Phenylen, Dioxan-2,5-diyl, Tetrahydropyran-2,5-diyl, Pyridin-2,5-diyl oder 1,4-Cyclohexenylen,

W eine Einfachbindung oder $-CH_2CH_2-$,

l 1 oder 2,

und I die oben gegebene polare Endgruppe bedeuten,

gering und/oder vernachlässigbar ist, so daß die Werte für $\tilde{\pi}$ zur Charakterisierung der lipophilen Eigenschaften von Verbindungen der Formel A benutzt werden können.

Es wurde nun gefunden, daß Flüssigkristallverbindungen,

- die eine polare Endgruppe der Formel I mit einem Lipophilieparameter $\tilde{\pi} \geqq 0{,}1$ enthalten und/oder
- die durch Formel A gegeben sind und eine polare Endgruppe der Formel I mit einem Lipophilieparameter $\tilde{\pi} \geqq 0{,}1$ aufweisen,

als Komponenten von Flüssigkristallmischungen besonders geeignet sind und insbesondere hohe Werte für den spezifischen Widerstand $\rho$ aufweisen. Ganz besonders geeignet sind Verbindungen, für die $\pi$ bzw. $\tilde{\pi} \geqq 0{,}3$ und insbesondere $\pi$ bzw. $\tilde{\pi} \geqq 0{,}5$ ist. Besonders bevorzugt sind weiter Verbindungen der Formel A, worin

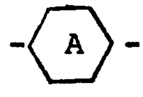

jeweils unabhängig voneinander 1,4-Cyclohexylen, lateral unsubstituiertes oder durch F in 2, 3 und/oder 5-Stellung mono- oder disubstituiertes 1,4-Phenylen bedeutet.

In Tabelle 1 sind für einige Flüssigkristallverbindungen mit der polaren Endgruppe II

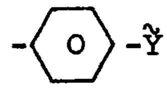 II

worin $\tilde{Y}$ = -CN, $-CF_3$, -N=C=S, $-OCHF_2$, $-OCF_3$, -Cl, -F, $-CH_3$ und $-CH_2OH$ bedeutet, die Hydrophilieparameter $\tilde{\pi}$, das Dipolmoment des entsprechenden Benzolderivates IIa

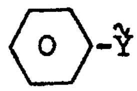 IIa

und die Dielektrizitätskonstante $\Delta\epsilon$ der flüssigkristallinen Modellverbindung

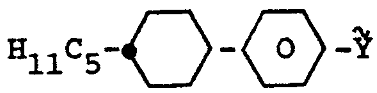 IIb

wiedergegeben. Aus Tab. 1 geht hervor, daß polare Endgrupppen der Formel Ia

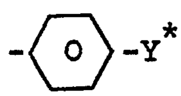 Ia

worin

$Y^*$ $-CF_3$, -NCS, $-OCHF_2$, $-OCF_3$, -Cl oder -F bedeutet, einen Lipophilieparameter $\tilde{\pi} \geqq 0{,}1$ aufweisen und daß daher Verbindungen der Formel A, enthaltend eine polare Endgruppe der Formel $Ia_1$ als Komponente von Flüssigkristallmischungen für MFKA's besonders geeignet sind. Ganz besonders bevorzugt sind Endgruppen der Formeln Ia1 und Ia2 aufweisende Flüssigkristallverbindungen

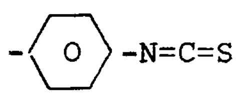 Ia1

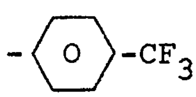 Ia2

die durch einen hohen Lipophilieparameter und gleichzeitig eine hohe Dielekrizitätskonstante charakterisiert sind, wie aus den hohen Dipolmomenten $\mu$ der entsprechenden Benzolderivate IIa bzw. den hohen Dielektrizitätskonstanten der entsprechenden Verbindungen der Formel IIb gefolgert werden kann. Diese Verbindungen weisen zum einen hohe Werte für den spezifischen Widerstand auf und zum anderen sind Mischungen, die diese Verbindungen enthalten oder darauf basieren, durch vergleichsweise kurze Schaltzeiten und niedrige Schwellenspannungen charakterisiert.

Weiterhin kann aus Tab. 1 entnommen werden, daß Flüssigkristallverbindungen, die eine Endgruppe der Formeln Ia3-Ia6 enhalten

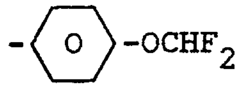 Ia3

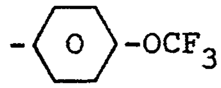 Ia4

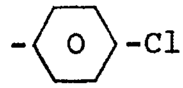 Ia5

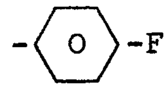 Ia6

als Komponenten von Flüssigkristallmischungen für MFKA's besonders geeignet sind; ganz besonders geeignet sind Flüssigkristallverbindungen mit Endgruppen der Formeln Ia3-Ia5 und insbesondere solche mit Endgruppen der Formeln Ia3 und Ia4.

Flüssigkristallverbindungen, enthaltend eine Endgruppe der Formel Ia7

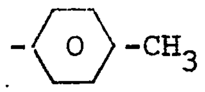 Ia7

weisen zwar einen Lipophilieparameter von $\tilde{\pi}$ = 0,56 auf, gleichzeitig sind diese Verbindungen jedoch dielektrisch neutral, so daß Flüssigkristallmischungen, enthaltend derartige Verbindungen in einem zu hohen Massenanteil von z. B. mehr als 20 Massen-%, durch zu hohe Schaltzeiten und Schwellenspannungen gekennzeichnet sind.

Aus Tab. 1 geht weiter hervor, daß Flüssigkristallverbindungen mit einer Endgruppe der Formeln Ia8 oder Ia9

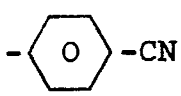 Ia8

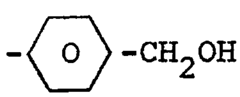 Ia9

durch negative Lipophilieparameter $\tilde{\pi}$ gekennzeichnet sind und daher nicht als Komponenten von Flüssigkristallmischungen für MFKA's geeignet sind. Am Beispiel der Verbindungen der Formeln Ia9 zeigt sich nochmals deutlich, daß die im Stand der Technik gegebene Korrelation zwischen spezifischem Widerstand und Dielektrizitätskonstante $\Delta \epsilon$ nicht allgemein gültig ist und nicht als Kriterium für die Entwicklung von Mischungen für MFKA's geeignet ist. Flüssigkristallverbindungen mit einer Endgruppe der Formel Ia9 weisen eine mittlere Dielektrizitätskonstante $\Delta \epsilon$ auf, wie aus dem Dipolwert des entsprechenden Benzolderivats der Formel IIa abgeleitet werden kann, so daß Flüssigkristallmischungen, enthaltend derartige Verbindungen, nach der im Stand der Technik gegebenen Relation einen hohen spezifischen Widerstand aufweisen sollten, was jedoch nicht der Fall ist.

Es wurde weiter gefunden, daß die in Tab. 2 aufgeführten polaren Endgruppen der Formeln I1-I23 durch Lipophilieparameter $\tilde{\pi} \geq 0,1$ gekennzeichnet sind und daß insbesondere Flüssigkristallverbindungen der Formel A, enthaltend eine polare Endgruppe der Formel I1-I23 für Flüssigkristallmischungen für MFKA's besonders geeignet sind.

Analog zu den lateral unsubstituierten Endgruppen der Formel Ia weisen auch die lateral substituierten Isothiocyanato-Endgruppen der Formeln I1 und I2, die lateral substituierte $CF_3$-Endgruppe der Formel I7 und die lateral substituierten $OCF_3$-Endgruppen der Formeln I12 und I13 besonders hohe Werte für den Lipophilieparameter $\tilde{\pi}$ auf und die diese Endgruppen enthaltenden Verbindungen der Formel A weisen ganz besonders günstige Eigenschaften für MFKA's und insbesondere einen hohen spezifischen Widerstand auf. Durch die Substitution in 3- und/oder 5-Stellung wird die dielektrische Anisotropie der Verbindungen stark

erhöht, was zu einer niedrigeren Schwellenspannung und zu kürzeren Schaltzeiten verglichen mit den entsprechenden unsubstituierten Verbindungen führt; daneben wird durch die laterale Substitution in 2,3- und/oder 5-Stellung die Fließviskosität günstig beeinflußt.

Wie bei den lateral unsubstituierten Endgruppen der Formel Ia1-Ia6 sind auch die lateral substituierten Cl-Endgruppen den lateral substituierten F-Endgruppen hinsichtlich ihrer Eignung für MFK-Anzeigen deutlich überlegen, so daß insbesondere Endgruppen der Formeln I5, I6, I8-I11, I14-I17 und I20-I23 bevorzugt sind. Verbindungen der Formel A, die diese Endgruppen enthalten, sind insbesondere durch hohe Werte für den spezifischen Widerstand und darüberhinaus durch eine hohe Temperatur- und UV-Stabilität, eine hohe Dielektrizitätskonstante $\Delta \epsilon$ und günstige Werte für die Fließviskosität gekennzeichnet. Ganz besonders bevorzugt sind Verbindungen der Formel A, die eine Endgruppe der Formeln I5, I6, I8, I14-I17, I20 und I21 enthalten.

Die lateral substituierten -$OCHF_2$-Endgruppen der Formeln I18 und I19 weisen zwar i. a. niedrigere Werte für $\tilde{\pi}$ auf als lateral substituierte Cl-Endgruppen. Dieser Unterschied ist jedoch meistens nicht sehr groß, so daß auch die $OCHF_2$-Endgruppen für MFKA's besonders geeignet sind; ganz besonders günstige Eigenschaften weisen Verbindungen der Formel A auf, die eine Endgruppe der Formel I18 enthalten.

Ganz besonders geeignet ist folgende kleinere Gruppe von Verbindungen der Formeln A1-10

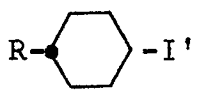 A1

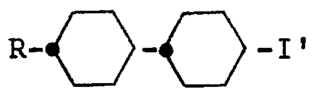 A2

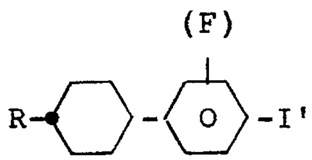 A3

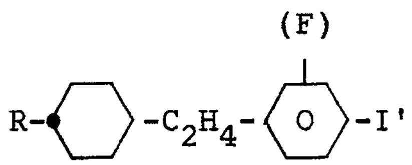 A4

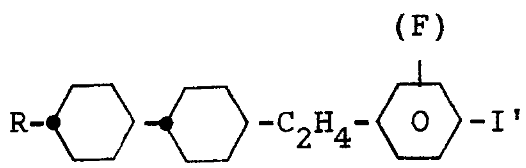 A5

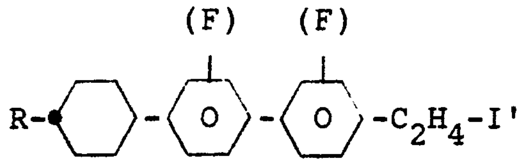

A6

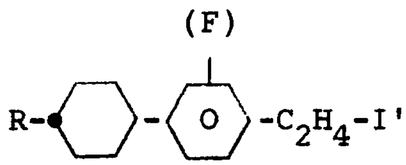

A7

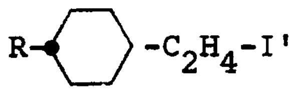

A8

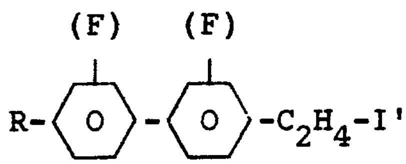

A9

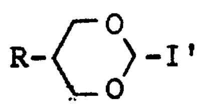

A10

worin

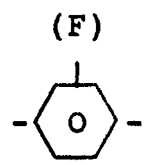

eine unsubstituierte oder in 2- oder 3-Stellung durch F monosubstituierte 1,4-Phenylengruppe und I' eine polare Endgruppe ausgewählt aus den Endgruppen der Formel Ia1-Ia6 und I1-I23 ist und R die oben angegebene Bedeutung hat.

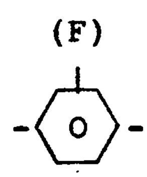

ist insbesondere eine unsubstituierte oder eine in 3-Stellung substituierte 1,4-Phenylengruppe; die 4-kernigen Verbindungen der Formeln A5 und A6 weisen vorzugsweise mindestens eine in 3-Stellung fluorierte 1,4-Phenylengruppe auf. Die polaren Endgruppen Ia1-Ia4, I1-I9 und I12-I21 sind bevorzugt; ganz besonders vorteilhaft sind die Endgruppen I1-I9 und I12-I21. R bedeutet insbesondere Alkyl, Alkoxy, Alkoxyalkyl oder Alkenyl mit 1-10 und ganz besonders mit 1-8 C-Atomen. Ganz besonders bevorzugt ist R Methyl, Ethyl, Propyl, Butyl, Pentyl, Hexyl, Heptyl, Octyl, Methoxy, Ethoxy, Propoxy, Butoxy, Pentoxy, Hexoxy, Heptoxy, Octoxy, Methoxymethyl, Ethoxymethyl, Propoxymethyl, Butoxymethyl, Methoxyethyl, Ethoxyethyl, Propoxyethyl, Pent-2-enyl, Pent-3-enyl, Pent-4-enyl, Hex-2-enyl, Hex-3-enyl, Hex-4-enyl oder Hex-5-enyl.

Die Verbindungen der Formel A und insbesondere der Formeln A1-A10 sind entweder bekannt und/oder werden nach an sich bekannten Methoden dargestellt, wie sie z. B. in der Literatur (z. B. in den Standardwerken von Houben-Weyl, Methoden der organischen Chemie, Georg-Thieme-Verlag, Stuttgart, Band IX, S. 867 ff.) beschrieben sind, und zwar unter Reaktionsbedingungen, die für die genannten Umsetzungen bekannt und geeignet sind. Dabei kann man auch von an sich bekannten, hier nicht näher

erwähnten Varianten Gebrauch machen.

Die in den erfindungsgemäßen MFKA's verwendeten Flüssigkristallmischungen basieren insbesondere auf Verbindungen der Formel A, die eine polare Endgruppe mit einem Lipophilieparameter $\tilde{\pi} \geqq 0,1$ enthalten und insbesondere auf den Verbindungen der Formeln A1-A10 mit $\tilde{\pi} \geqq 0,1$. Der Massenanteil der Verbindungen der Formeln A und insbesondere der Formeln A1-A10 mit $\tilde{\pi} \geqq 0,1$ an den erfindungsgemäßen Flüssigkristallmischungen beträgt vorzugsweise 20 %-100 %, insbesondere 30 %-100 % und ganz besonders 38 %-100 %. Die Flüssigkristallverbindungen enthalten vorzugsweise 1-25, insbesondere 2-13 und ganz besonders mehr als 2 Verbindungen der Formel A und besonders der Formeln A1-A10 mit $\tilde{\pi} \geqq 0,1$.

Ganz besonders bevorzugt ist eine kleinere Gruppe von Basis-Mischungen, die auf den in Tab. 3 angegebenen Verbindungen der Formeln A1-A10 mit $\tilde{\pi} \geqq 0,1$ beruht. Angegeben ist der Massenanteilbereich, in dem die in diesen Basismischungen verwendeten Flüssigkristallverbindungen in den erfindungsgemäßen Flüssigkristallmischungen vorkommen. Die Summe der Massenanteile der in den Basismischungen enthaltenen Verbindungen an den erfindungsgemäßen Flüssigkristallmischungen beträgt 15 %-95 % und insbesondere 25 %-95 % und ganz besonders 35 %-95 %. Die auf den Basismischungen beruhenden erfindungsgemäßen Flüssigkristallmischungen werden erhalten, indem den Basismischungen weitere Verbindungen in den erlaubten Massenprozentbereichen zugesetzt werden. Diese zusätzlichen Verbindungen werden insbesondere aus der Gruppe der Verbindungen der Formel A mit $\tilde{\pi} \geqq 0,1$ ausgewählt.

Es versteht sich von selbst, daß den Basismischungen ggf. auch noch weitere Verbindungen zugesetzt werden können, u. a. insbesondere dielektrisch neutrale Verbindungen, die eine unpolare Endgruppe mit einem $\tilde{\pi} \geqq 0,1$ enthalten. Ganz besonders geeignet sind brückenlose Verbindungen der Formeln Z1-Z6

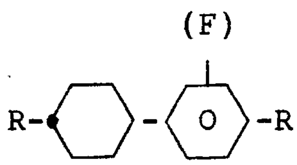

Z1

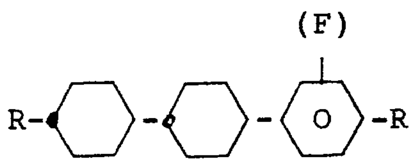

Z2

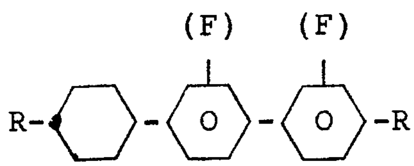

Z3

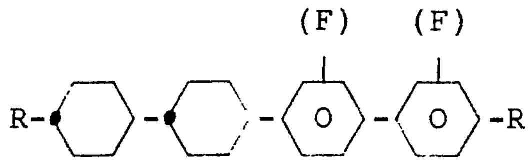

Z4

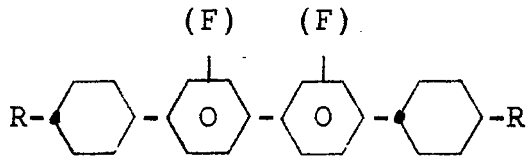

Z5

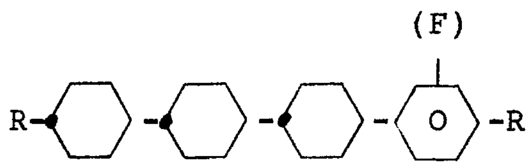

Z6

worin R und

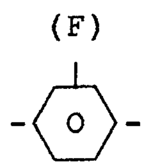

die oben angegebene Bedeutung haben.

Besonders bevorzugt können den erfindungsgemäßen Mischungen auch dielektrisch neutrale oder dielektrisch positive Verbindungen der Formeln Z7-Z8

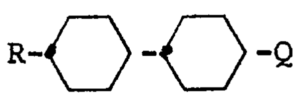

Z7

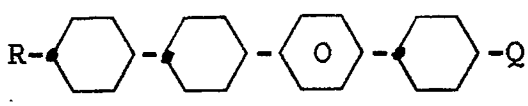

Z8

worin Q R, Y* oder R'-Y*, R' Alkyl, Alkoxy, Alkoxyalkyl oder Alkenyl mit 1-5 C-Atomen sind und die Bedeutung von R und Y* oben gegeben ist. Zur Charakterisierung der Lipophilie der Verbindungen Z7 und Z8 kann $\tilde{\pi}$ nicht verwendet werden. Definiert man einen weiteren Lipophilieparameter $\tilde{\tilde{\pi}}$ gemäß

$$\tilde{\tilde{\pi}} = \log P_{III} - \log P_{CH}$$

worin $P_{III}$ der Verteilungsquotient von III

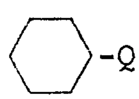

und $P_{CH}$ der von unsubstituiertem Cyclohexan im System Octan-1-ol/Wasser ist, so sind solche Verbindungen der Formel Z7 und Z8 ganz besonders bevorzugt, deren Endgruppe einen Lipophilieparameter $\tilde{\tilde{\pi}} \geqq 0{,}1$

aufweist.

Der Massenanteil dielektrisch neutraler Verbindungen ist jedoch wegen des nachteiligen Einflusses auf die Schwellenspannung und Schaltzeit vorzugsweise nicht zu hoch und insbesondere kleiner als 30 % und ganz besonders kleiner als 20 %.

Es können auch weitere, hier nicht explizit genannte Verbindungen, zugesetzt werden. In vielen Fällen resultieren jedoch dann ungünstigere Eigenschaften. Der Fachmann kann jedoch leicht feststellen, ob und ggf. in welchen Mengen, weitere Verbindungen zum Einsatz kommen können.

Die Herstellung der erfindungsgemäßen Flüssigkristallmischungen erfolgt in an sich üblicher Weise. In der Regel wird die gewünschte Menge der in geringerer Menge verwendeten Komponenten in den den Hauptbestandteil ausmachenden Komponenten gelöst, zweckmäßig bei erhöhter Temperatur. Es ist auch möglich, Lösungen der Komponenten in einem organischen Lösungsmittel, z. B. in Aceton, Chloroform oder Methanol, zu mischen und das Lösungsmittel nach Durchmischung wieder zu entfernen, beispielsweise durch Destillation.

Die erfindungsgemäßen Flüssigkristallmischungen können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

Die erfindungsgemäßen Flüssigkristallmischungen können durch derartige Zusätze oder durch den Zusatz weiterer Verbindungen wie z. B. solche der Formeln Z1-Z4 oder auch anderer Verbindungen im Hinblick auf die jeweilige Anwendung modifiziert und z. B. optimal an die Treiberelektronik angepaßt werden. Entscheidend aber ist, daß Flüssigkristallmischungen,

- eine polare Endgruppe der Formel I mit einem endgruppenbezogenen Lipophilieparameter $\tilde{\pi} \geq 0{,}1$ enthalten und/oder
- die auf Verbindungen der Formel A und insbesondere der Formeln A 1 - A 10 basieren, welche polare Endgruppen mit $\tilde{\pi} \geq 0{,}1$ enthalten.

zur Verwendung in erfindungsgemäßen MFK-Anzeigen besonders geeignet sind. Ganz besonders geeignet sind jedoch Flüssigkristallmischungen, die auf den in Tab. 3 aufgeführten Basismischungen beruhen und Verbindungen der Formeln A1-A10 in definierten Massenprozentenbereichen enthalten.

Tabelle 1: Lipophilieparameter $\tilde{\pi}$ einiger lateral unsubstituierter Endgruppen

| terminaler Substituent $\tilde{Y}$ | Hydrophilie-parameter $\tilde{\pi}$ von -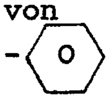-$\tilde{Y}$ | Dipolmoment μ von 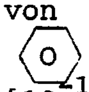-$\tilde{Y}$ [$10^{-18}$ esu.cm] | Dielektrizitätskonstante Δε von $C_5H_{11}$-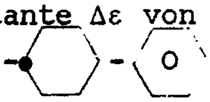-$\tilde{Y}$ |
|---|---|---|---|
| CN | -0.57 | 3.90 | 13 |
| $CF_3$ | 0.88 | 2.56 | 11 |
| N=C=S | 1.15 | 2.9 | 10.8 |
| $OCF_2H$ | 0.58 | 2.46 | 7.6 |
| $OCF_3$ | 1.04 | - | 7.1 |
| Cl | 0.71 | 1.58 | - |
| F | 0.14 | 1.46 | 3.2 |
| $CH_3$ | 0.56 | 0.4 | 0.2 |
| $CH_2OH$ | -1.03 | 1.68 | |

Tabelle 2: Lateral substituierte polare Endgruppen mit $\tilde{\pi} \geqq 0,1$

| Bezeichnung | $X^1$ | $X^2$ | $X^3$ | Y |
|---|---|---|---|---|
| I1 | H | H | F | NCS |
| I2 | H | F | F | NCS |
| I3 | H | H | F | F |
| I4 | H | F | F | F |
| I5 | H | H | F | Cl |
| I6 | H | F | F | Cl |
| I7 | H | H | F | $CF_3$ |
| I8 | H | H | F | $CFCl_2$ |
| I9 | H | H | F | $CCl_2H$ |
| I10 | H | H | F | $CCl_3$ |
| I11 | H | F | F | $CCl_3$ |
| I12 | H | H | F | $OCF_3$ |
| I13 | H | F | F | $OCF_3$ |
| I14 | H | H | F | $OCF_2Cl$ |
| I15 | H | F | F | $OCF_2Cl$ |
| I16 | H | H | F | $OCFCl_2$ |
| I17 | H | F | F | $OCFCl_2$ |
| I18 | H | H | F | $OCF_2H$ |
| I19 | H | F | F | $OCF_2H$ |
| I20 | H | H | F | $OCCl_2H$ |
| I21 | H | F | F | $OCCl_2H$ |
| I22 | H | H | F | $OCCl_3$ |
| I23 | H | F | F | $OCCl_3$ |

Tabelle 3: Bevorzugte Basismischungen

| Basismischung | Verbindungen | Massenprozentbereich |
|---|---|---|
| BM 1 | A1 | 15-65 |
| | A3 | 5-45 |
| BM 2 | A1 | 13-70 |
| | A4 | 5-48 |
| BM 3 | A1 | 17-69 |
| | A5 | 3-40 |
| BM 4 | A1 | 15-67 |
| | A6 | 3-39 |
| BM 5 | A1 | 14-73 |
| | A7 | 3-40 |
| BM 6 | A1 | 15-68 |
| | A9 | 5-35 |
| BM 7 | A2 | 10-59 |
| | A3 | 5-45 |
| BM 8 | A2 | 13-72 |
| | A4 | 7-38 |
| BM 9 | A2 | 11-69 |
| | A5 | 3-42 |
| BM 10 | A2 | 10-58 |
| | A6 | 7-49 |
| BM 11 | A2 | 8-65 |
| | A7 | 3-38 |
| BM 12 | A2 | 15-70 |
| | A10 | 5-45 |
| BM 13 | A8 | 12-73 |
| | A3 | 5-50 |
| BM 14 | A8 | 8-67 |
| | A4 | 3-35 |
| BM 15 | A8 | 9-63 |
| | A6 | 5-40 |
| BM 16 | A8 | 10-60 |
| | A5 | 3-4 |

| | | |
|---|---|---|
| BM 17 | A8 | 12-68 |
| | A9 | 3-40 |
| BM 18 | A8 | 9-71 |
| | A10 | 3-44 |
| BM 19 | A1 | 15-50 |
| | A2 | 5-45 |
| | A3 | 2-35 |
| BM 20 | A1 | 13-51 |
| | A2 | 4-43 |
| | A5 | 1-34 |
| BM 21 | A1 | 10-50 |
| | A2 | 5-47 |
| | A6 | 2-35 |
| BM 22 | A1 | 11-51 |
| | A2 | 3-40 |
| | A7 | 2-30 |
| BM 23 | A1 | 13-42 |
| | A2 | 6-41 |
| | A9 | 1-25 |
| BM 24 | A1 | 10-45 |
| | A2 | 5-40 |
| | A3 | 1-30 |
| | A5 | 1-25 |
| BM 25 | A1 | 9-53 |
| | A2 | 4-38 |
| | A3 | 1-22 |
| | A6 | 1-17 |
| BM 26 | A8 | 17-51 |
| | A2 | 4-45 |
| | A3 | 3-39 |
| BM 27 | A8 | 9-48 |
| | A2 | 7-41 |
| | A4 | 1-29 |
| BM 28 | A8 | 12-48 |
| | A2 | 4-40 |
| | A5 | 1-38 |

| | | |
|---|---|---|
| BM 29 | A8 | 11-53 |
| | A2 | 5-45 |
| | A6 | 1-25 |
| BM 30 | A8 | 15-45 |
| | A2 | 3-42 |
| | A7 | 2-29 |
| BM 31 | A8 | 13-43 |
| | A2 | 2-39 |
| | A9 | 3-35 |
| BM 32 | A10 | 14-45 |
| | A2 | 6-40 |
| | A3 | 2-35 |
| BM 33 | A10 | 10-49 |
| | A2 | 5-45 |
| | A4 | 4-28 |
| BM 34 | A10 | 14-53 |
| | A2 | 4-39 |
| | A5 | 3-39 |
| BM 35 | A10 | 14-53 |
| | A2 | 3-45 |
| | A6 | 2-40 |
| BM 36 | A10 | 12-48 |
| | A2 | 3-40 |
| | A7 | 1-33 |

Die im folgenden angeführten Beispiele sollen die Erfindung erläutern ohne sie zu begrenzen. Dabei bedeuten:

m.p. = Schmelzpunkt
c.p. = Klärpunkt
$\eta$ = Viskosität (20 °C)
$\Delta n$ = optische Anisotropie (20 °C, 58 nm)
$\Delta\epsilon$ = dielektrische Anisotropie (20 °C, 1 kHz)

Die vorstehend und nachstehend angegebenen Prozentzahlen sind Massenprozente; alle Temperaturen sind in °C angegeben.

Beispiel 1

Ein Matrix Flüssigkristalldisplay vom TFT-Typ, welches

10.0 % 4-(trans-4-propylcyclohexyl)-1-chlorobenzol
8.0 % 4-(trans-4-pentylcyclohexyl)-1-chlorobenzol
6.0 % 4-(trans-4-heptylcyclohexyl)-1-chlorobenzol
8.0 % 4-[trans-4-(trans-4-ethylcyclohexyl)-cyclohexyl]-1-trifluoromethoxybenzol
10.0 % 4-[trans-4-(trans-4-propylcyclohexyl)-cyclohexyl]-1-trifluoromethoxybenzol
7.0 % 4-[trans-4-(trans-4-butylcyclohexyl)-cyclohexyl]-1-trifluoromethoxybenzol
10.0 % 4-[trans-4-(trans-4-pentylcyclohexyl)-cyclohexyl]-1-trifluoromethoxybenzol
12.0 % 4-(trans-4-propylcyclohexyl)-3',4',5'-trifluorobiphenyl
10.0 % 4-(trans-4-pentylcyclohexyl)-3',4',5'-trifluorobiphenyl

| | |
|---|---|
| 5.0 % | 1-[trans-4-(trans-4-propylcyclohexyl)-cyclohexyl]-2-(4-trifluoromethoxyphenyl)-ethan |
| 5.0 % | 1-[trans-4-(trans-4-pentylcyclohexyl)-cyclohexyl]-2-(4-trifluoromethoxyphenyl)-ethan |
| 3.0 % | 4,4'-bis-(trans-4-propylcyclohexyl)-2-fluorobiphenyl |
| 3.0 % | 4,4'-bis-(trans-4-pentylcyclohexyl)-2-fluorobiphenyl |
| 3.0 % | 4-(trans-4-pentylcyclohexyl)-4'-(trans-4-propylcyclohexyl)-2-fluorobiphenyl |

Die Flüssigkristallmischung weist die folgenden physikalischen Parameter auf:

c.p. = 98 °C
$\eta$ = 18 mPa.s
$\Delta n$ = 0.101
$\Delta\epsilon$ = 6.2

Beispiel 2

Ein Matrix Flüssigkristalldisplay vom TFT-Typ, welches eine nematische Flüssigkristallmischung enthält, die besteht aus

| | |
|---|---|
| 9.0 % | 4-(trans-4-propylcyclohexyl)-1-chlorobenzol |
| 8.0 % | 4-(trans-4-pentylcyclohexyl)-1-chlorobenzol |
| 6.0 % | 4-(trans-4-heptylcyclohexyl)-1-chlorobenzol |
| 10.0 % | 4-[trans-4-(trans-4-ethylcyclohexyl)-cyclohexyl]-2-fluoro-1-difluoromethoxybenzol |
| 14.0 % | 4-[trans-4-(trans-4-propylcyclohexyl)-cyclohexyl]-2-fluoro-1-difluoromethoxybenzol |
| 14.0 % | 4-[trans-4-(trans-4-butylcyclohexyl)-cyclohexyl]-2-fluoro-1-difluoromethoxybenzol |
| 12.0 % | 4-(trans-4-propylcyclohexyl)-3'-fluoro-4'-difluoromethoxybiphenyl |
| 10.0 % | 4-(trans-4-pentylcyclohexyl)-3'-fluoro-4'-difluoromethoxybiphenyl |
| 5.0 % | 1-[trans-4-(trans-4-propylcyclohexyl)-cyclohexyl]-2-(4-trifluoromethoxyphenyl)-ethan |
| 5.0 % | 1-[trans-4-(trans-4-pentylcyclohexyl)-cyclohexyl]-2-(4-trifluoromethoxyphenyl)-ethan |
| 3.0 % | 4,4'-bis-(trans-4-propylcyclohexyl)-2-fluorobiphenyl |
| 2.0 % | 4,4'-bis-(trans-4-pentylcyclohexyl)-2-fluorobiphenyl |
| 2.0 % | 4-(trans-4-pentylcyclohexyl)-4'-(trans-4-propylcyclohexyl)-2-fluoro-biphenyl |

Die Flüssigkristallmischung weist die folgenden physikalischen Parameter auf:

c.p. = 92 °C
$\eta$ = 22 mPa.s
$\Delta\epsilon$ = 5.5
$\Delta n$ = 0.105

## Patentansprüche

**1.** Matrix-Flüssigkristallanzeige (MFKA) mit

- zwei planparallelen, mit Orientierungsschichten versehenen Trägerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie,

dadurch gekennzeichnet, daß die Flüssigkristallmischung auf dielektrisch positiven Flüssigkristallverbindungen basiert, die eine polare Endgruppe der Formel I enthalten

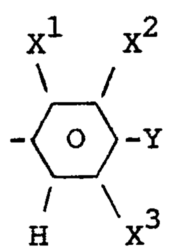

I

worin

Y -NCS, -F, -Cl, $-CZ_lH_{3l-1}$ oder $-OCZ_lH_{3l-1}$,
$X^1$, $X^2$ und $X^3$ unabhängig voneinander H oder F,
Z Cl oder F und
l 1, 2 oder 3 bedeuten, wobei der endgruppenbezogene Lipophilieparameter einen Wert $\tilde{\pi} \geqq 0{,}1$ aufweist.

2. MFKA nach Anspruch 1, dadurch gekennzeichent, daß die Flüssigkristallmischung auf Verbindungen der Formel A basiert

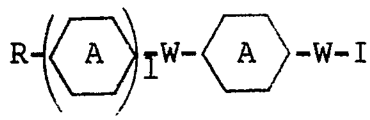 A

worin

R eine Alkylgruppe mit 1-15 C-Atomen, worin auch eine oder mehrere nicht benachbarte $CH_2$-Gruppen durch -O-, -CO-, -COO- oder -CH=CH- ersetzt sein können,

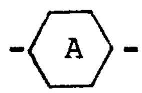

jeweils unabhängig voneinander 1,4-Cyclohexylen, oder lateral unsubstituiertes oder durch F in 2, 3 und/oder 5-Stellung mono- oder disubstituiertes 1,4-Phenylen, Dioxan-2,5-diyl, Tetrahydropyran-2,5-diyl, Pyridin-2,5-diyl oder 1,4-Cyclohexenylen,

W eine Einfachbindung oder $-CH_2CH_2-$, und

l 1 oder 2

bedeuten und I die polare Endgruppe aus Anspruch 1 ist.

3. Flüssigkristallmischung, dadurch gekennzeichnet, daß sie mit der Flüssigkristallmischung in einer MFKA nach mindestens einem der Ansprüche 1-5 identisch ist.

4. Verwendung einer Flüssigkristallmischung nach Anspruch 3 in einem elektrooptischen System.